(19) Europäisches Patentamt
European Patent Office
Office européen des brevets

(11) **EP 3 746 777 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **19705099.0**

(22) Anmeldetag: **28.01.2019**

(51) Internationale Patentklassifikation (IPC):
***G01N 25/18*** *(2006.01)*

(52) Gemeinsame Patentklassifikation (CPC):
**G01N 25/18**

(86) Internationale Anmeldenummer:
**PCT/EP2019/052025**

(87) Internationale Veröffentlichungsnummer:
**WO 2019/145549 (01.08.2019 Gazette 2019/31)**

(54) **VORRICHTUNG UND VERFAHREN ZUR MESSUNG EINER WÄRMELEITFÄHIGKEIT EINER PROBE**

DEVICE AND METHOD FOR MEASURING THE THERMAL CONDUCTIVITY OF A SAMPLE

DISPOSITIF ET PROCÉDÉ DE MESURE DE LA CONDUCTIVITE THERMIQUE D'UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2018   DE 102018101906**

(43) Veröffentlichungstag der Anmeldung:
**09.12.2020   Patentblatt 2020/50**

(73) Patentinhaber: **Freie Universität Berlin**
**14195 Berlin (DE)**

(72) Erfinder:
• **REICH, Stephanie**
**10779 Berlin (DE)**
• **VOGT, Anna-Maria**
**12555 Berlin (DE)**
• **GHARAGOZLOO-HUBMANN, Katayoun**
**14469 Potsdam (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**WO-A1-2017/073479     US-A- 4 259 859**
**US-B1- 6 331 075**

• **Astm International: "D5470-12 Test Method for Thermal Transmission Properties of Thermally Conductive Electrical Insulation Materials", , 31. Dezember 2012 (2012-12-31), XP055589288, West Conshohocken, PA DOI: 10.1520/D5470-12 Gefunden im Internet: URL:http://www.astm.org/cgi-bin/resolver.c gi?D5470-12 [gefunden am 2019-05-16]**
• **KOENIG R: "ZUR BESCHR[NKUNG DES ANSPRUCHSINHALTS DURCH"BAR"-DERIVATE", MITTEILUNGEN DER DEUTSCHEN PATENTANWAELTE, HEYMANN, KOLN, DE, 1 January 1997 (1997-01-01), page 62, XP001248632, ISSN: 0026-6884**

**Beschreibung**

Die Erfindung betrifft eine Messvorrichtung zur Messung einer Wärmeleitfähigkeit einer Probe nach Anspruch 1 sowie ein Verfahren zur Messung einer Wärmeleitfähigkeit einer Probe nach Anspruch 14.

Eine derartige Messvorrichtung umfasst eine Wärmequelle, eine Wärmesenke, eine Probenhalterung und eine Temperatursensoranordnung. Die Probenhalterung ist zur Fixierung der Probe eingerichtet und umfasst mehrere zum Halten der Probe ausgebildete Halteteile. Dabei ist zumindest ein Halteteil eingerichtet, die Wärmequelle mit der Probe wärmeleitend zu verbinden. Zumindest ein weiteres Halteteil ist eingerichtet, die Probe wärmeleitendend mit der Wärmesenke zu verbinden. Die Temperatursensoranordnung ist eingerichtet, an mehreren Orten entlang des Wärmeflusses zwischen der Wärmequelle und der Wärmesenke Temperaturmesswerte zu ermitteln, um die Wärmeleitfähigkeit der Probe zu bestimmen.

Eine Messvorrichtung ist im Standard ASTM D5470 (internationale Standardisierungsorganisation) beschrieben. Die Probe wird in Form eines Plättchens zwischen zwei Messbalken geklemmt, an denen eine Reihe von Temperatursensoren angeordnet ist. Die gemessenen Temperaturen werden auf beiden Seiten der Probe extrapoliert, um eine thermische Impedanz der Probe zu ermitteln. Die thermische Impedanz mehrerer Proben desselben Materials und mit unterschiedlicher Probendicke wird auf diese Weise gemessen und gegen die Probendicke aufgetragen, wobei sich eine lineare Abhängigkeit zeigt. Die Wärmeleitfähigkeit kann anhand der Steigung der thermischen Impedanz mit der Probendicke ermittelt werden.

Die Wärmeleitfähigkeit ist ein Maß für die Fähigkeit eines Materials, Wärme zu übertragen. Da die Wärmestrahlung bei Temperaturen unterhalb von 500 °C in der Regel eine untergeordnete Rolle spielt, ist die Wärmeleitung häufig die maßgebliche Größe für die transportierte thermische Energie, wenn Materialien mit unterschiedlichen thermischen Energien miteinander in Kontakt treten. Die Wärmeleitfähigkeit in W/(m·K) ist eine temperaturabhängige Materialkonstante und wird für den eindimensionalen Fall durch das Fourier-Gesetz besch rieben.

In vielen Bereichen, insbesondere bei moderner Hochleistungselektronik, ist es von zunehmender Bedeutung, die Wärmeleitfähigkeit der eingesetzten Materialien präzise zu bestimmen.

Die Wärmeleitfähigkeit eines Materials wird zum Beispiel bestimmt, um Kühlkörper für Geräte und Bauteile zu entwerfen (thermisches Management), zur Überwachung und Optimierung von Herstellungsverfahren (bspw. für Medikamentenzusammensetzungen oder in der Lebensmitteltechnologie) oder um transportierte Wärme in Heizkraftwerken oder Geothermieanlagen zu berechnen. Daher wächst der Bedarf an zuverlässigen Verfahren, die in der Lage sind, ein breites Spektrum von Materialien und ihren thermischen Eigenschaften zu charakterisieren.

Zahlreiche Verbundmaterialien sind wegen Schichtstrukturen oder bedingt durch ihre Inhaltsstoffe mikroskopisch oder gar makroskopisch anisotrop aufgebaut. Verbreitete Anwendungen dafür sind Solarzellen, Gewebe/Faser-verstärkte Laminat-Konstruktionen und Lithium-Ionen-Zellen, insbesondere für Elektrofahrzeuge. Die aktuelle Entwicklung hin zu anisotropen Kompositen und faserverstärkten Verbundmaterialien erfordert neue Charakterisierungsmethoden, die den strukturellen Besonderheiten der Materialien gerecht werden und präzise und richtungsselektive Eigenschaftsmessungen ermöglichen.

Mit der bekannten Messvorrichtung nach ASTM D5470 ist es möglich, die Wärmeleitfähigkeit der Probe in einer Raumrichtung zu bestimmen, nämlich in Richtung der Probendicke. Für anisotrope Materialien ist es wünschenswert, die Wärmeleitfähigkeit in mehreren Raumrichtungen der Probe zu ermitteln. So haben beispielsweise Holz oder faserverstärkte Verbundmaterialien entlang der Fasern eine andere Wärmeleitfähigkeit als quer zu den Fasern. Für eine Messung in einer weiteren Raumrichtung müssen bei der bekannten Messvorrichtung anders geschnittene Plättchen hergestellt werden. Bei einigen Verbundmaterialien sind derart geschnittene Plättchen aber nicht ausreichend stabil. Zudem ist eine solche Probenpräparation und Messung zeitaufwändig und umständlich und aufgrund von möglicherweise nicht homogen verlaufenden Fasern in der Probe auch häufig mit Ungenauigkeiten behaftet.

Ferner können mit der bekannten Messvorrichtung Wärmeleitfähigkeiten von Materialien mit besonders hoher Wärmeleitfähigkeit nicht oder nur mit oftmals großen Ungenauigkeiten gemessen werden.

Die US 6,331,075 B1 und die WO 2017/073479 A1 beschreiben weitere Messvorrichtungen.

Ausgehend vom Fourier-Gesetz ist ein experimenteller Weg zur Charakterisierung der Wärmeleitfähigkeit eine ortsaufgelöste Temperaturmessung an der Probe unter stationärem Wärmestrom. Ein solches Messverfahren beschreiben Tritt, T. M., und Weston, D. in "Measurement Techniques and Considerations for Determining Thermal Conductivity of Bulk Materials", Thermal Conductivity, T. M. Tritt, ed., Springer, New York, 2004, Seiten 187 bis 203.

Neben den statischen Verfahren wurden verschiedene dynamische Verfahren entwickelt, bei denen durch eine periodisch veränderliche oder gepulste Wärmequelle eine kurzzeitige Temperaturänderung in der Probe verursacht wird. Hierzu zählen insbesondere die nachfolgenden Verfahren:

Maldonado, O.,"Pulse Method for Simultaneous Measurement of Electric Thermopower and Heat Conductivity at Low Temperatures", Cryogenics, 32(10), 1992, Seiten 908 bis 912, beschreibt ein gepulstes Messverfahren.

Stalhane, B., und Pyk, S., "New Method for Determining the Coefficients of Thermal Conductivity", Tek. Tidskr., 61(28), 1931, Seiten 389 bis 393, beschreiben ein Heißdrahtverfahren.

Bouguerra, A. et al., "Measurement of Thermal Conductivity, Thermal Diffusivity and Heat Capacity of Highly Porous Building Materials Using Transient Plane Source Technique", Int. Commun. Heat Mass Transfer, 28(8), 2001, Seiten 1065 bis 1078, beschreiben ein sogenanntes "Transient-Plane-Source"-Verfahren.

Parker, W. J. et al., "Flash Method of Determining Thermal Diffusivity, Heat Capacity, and Thermal Conductivity", J. Appl. Phys., 32(9), 1961, Seiten 1679 bis 1684, beschreiben ein Laser-Flash-Verfahren.

Die vorstehend genannten dynamischen Verfahren sind allerdings jeweils nur für einen bestimmten Bereich von messbaren Wärmeleitfähigkeiten ausgelegt und weisen einen komplexen Versuchsaufbau auf. Außerdem wird die Wärmeleitfähigkeit nicht direkt bestimmt sondern aus der thermische Diffusivität hergeleitet, wozu noch weitere Materialparameter ermittelt werden müssen.

Die bekannten stationären und dynamischen Verfahren ermöglichen insbesondere keine oder keine zufriedenstellende Messung einer anisotropen Wärmeleitfähigkeit. Das Transient-Plane-Source-Verfahren und das Laser-Flash-Verfahren ermöglichen keine Unterscheidung der Wärmeleitfähigkeit in beide Richtungen der Ebene einer Probe. Die Transient-Plane-Methode erfordert für Materialien mit hoher Wärmeleitfähigkeit Proben in einer Größe, die oftmals nicht verfügbar ist.

Der Erfindung liegt das Problem zugrunde, eine verbesserte Messvorrichtung bzw. ein verbessertes Messverfahren zur Messung einer Wärmeleitfähigkeit einer Probe bereitzustellen.

Gelöst wird dieses Problem durch eine Messvorrichtung zur Messung einer Wärmeleitfähigkeit einer Probe gemäß Anspruch 1.

Danach ist vorgesehen, dass ein erstes Halteteil der Probenhalterung ein erstes Material umfasst oder daraus besteht und ein zweites Halteteil der Probenhalterung ein zweites Material umfasst oder daraus besteht. Dabei weist das erste Material eine andere Wärmeleitfähigkeit auf als das zweite Material, wobei jeweils zumindest zwei Halteteile derart auf gegenüberliegenden Seiten der Probe angeordnet oder anordenbar sind, dass ein Wärmefluss von der Wärmequelle zur Wärmesenke durch die Probe senkrecht zur Wärmeflussrichtung durch eines oder mehrere der Halteteile verläuft, wenn die Probe mittels der Probenhalterung fixiert ist. Vorliegend sind zumindest zwei erste Halteteile und zumindest zwei zweite Halteteile vorgesehen, wobei die zumindest zwei ersten Halteteile auf gegenüberliegenden Seiten der Probe angeordnet oder anordenbar sind und die zumindest zwei zweiten Halteteile auf gegenüberliegenden Seiten der Probe angeordnet oder anordenbar sind.

Die Wärmeleitfähigkeiten der beiden Halteteile unterscheiden sich insbesondere derart voneinander, dass eines der Halteteile ein guter Wärmeleiter (also als ein wärmeleitendes Halteteil ausgebildet ist) und ein anderes der Halteteile kein Wärmeleiter ist (also als ein wärmeisolierendes Halteteil ausgebildet ist). Dabei sind mehr als ein erstes Halteteil und mehr als ein zweites Halteteil vorgesehen, wobei die ersten Halteteile das erste Material umfassen oder daraus bestehen und die zweiten Halteteile das zweite Material umfassen oder daraus bestehen.

Jedes der Halteteile der Probenhalterung steht in Berührung mit der Probe, wenn die Probe durch die Probenhalterung fixiert ist. Die Halteteile können jeweils einstückig ausgebildet sein. Die Wärmequelle weist im Betrieb der Messvorrichtung eine höhere Temperatur auf als die Wärmesenke. Beispielsweise umfasst die Wärmequelle eine Heizung. Die Wärmesenke kann Kühlrippen oder eine andere Kühlvorrichtung umfassen. Bei einer bestimmungsgemäßen Benutzung der Messvorrichtung fließt Wärme von der Wärmequelle durch zumindest eines der Halteteile, durch die Probe und durch zumindest ein weiteres der Halteteile zur Wärmesenke.

Durch den Einsatz von Halteteilen mit unterschiedlichen Wärmeleitfähigkeiten kann ein Wärmfluss z.B. in eine Richtung durch die Probe gelenkt werden, um so die Wärmeleitfähigkeit in einer Richtung senkrecht zur Probendicke (also in der Probenebene) zu bestimmen. Die Halteteile sind also z.B. so angeordnet oder anordenbar, dass ein Wärmfluss in eine Richtung durch die Probe quer zur kürzesten Geraden zwischen der Wärmequelle und der Wärmesenke verläuft. Ferner erlauben die verschiedenen Wärmeleitfähigkeiten der Halteteile besonders genaue Messungen, insbesondere von gut wärmeleitenden Probenmaterialien.

Die Wärmeleitfähigkeit des ersten Materials kann größer, insbesondere wesentlich größer, als die Wärmeleitfähigkeit des zweiten Materials sein, insbesondere mindestens das Fünffache oder sogar mindestens das Zehnfache der Wärmeleitfähigkeit des zweiten Materials betragen. Die Wärmeleitfähigkeit des isolierenden Halteteils liegt beispielsweise deutlich unter der zu erwartenden Wärmeleitfähigkeit der Probe.

Das erste Material kann ein Wärmeleiter sein. Insbesondere kann das erste Material eine Wärmeleitfähigkeit von über 100 W/(m K) aufweisen. Alternativ oder zusätzlich ist das zweite Material ein Wärmeisolator, der z.B. eine Wärmeleitfähigkeit von unter 1 W/(m K) aufweist. So kann der Wärmefluss durch die Probe je nach Anordnung der Halteteile selektiv in eine bestimmte vorgegebene Wärmeflussrichtung gelenkt werden, um die Wärmeleitfähigkeit der Probe in einer bestimmten Richtung zu messen.

Die Wärmeleitfähigkeiten der Halteteile können so ausgestaltet sein, dass ein Wärmefluss durch die zweiten Halteteile keinen wesentlichen Beitrag zum gesamten Wärmefluss bildet.

Zwischen mehreren der Halteteile kann ein Spalt ausgebildet sein, insbesondere in Form eines Luftspalts. Die Probenhalterung ist so ausgebildet und eingerichtet, dass die Halteteile derart anordenbar sind, dass zwischen zumindest zwei Halteteilen ein Spalt ausgebildet ist. Hierdurch kann eine Strecke vorgegeben werden, entlang der die Wärme der Wärmequelle nur durch die Probe und nicht durch ein benachbartes Halteteil fließt, was eine besonders genaue Messung ermöglicht. Durch den Spalt sind die Halteteile, zwischen denen der Spalt ausgebildet ist, voneinander beabstandet.

Der Spalt kann einstellbar sein, z.B. mittels einer Stellvorrichtung.

Der Spalt kann zwischen zwei auf derselben Seite der Probe angeordneten Halteteilen ausgebildet sein, z.B. in einem Zwischenraum zwischen der Probe und der Wärmequelle oder zwischen der Probe und der Wärmesenke. Optional ist auf beiden Seiten der Probe zwischen jeweils zumindest zwei Halteteilen ein Spalt ausgebildet.

Das erste Material kann Aluminium sein. Alternativ ist das erste Material z.B. Stahl, Messing, Kupfer, eine Kupferlegierung, eine Aluminiumlegierung, Bronze, Nickel, Molybdän, Wolfram eine Titanlegierung, Aluminiumoxid, Aluminiumnitrid, Siliciumnitrid oder Siliciumcarbid. Das zweite Material kann Polyetheretherketon (PEEK) sein oder z.B. Polyphenylsulfid, Polybutylenterephthalat, Polyethersulfon, Acrylnitril-Butadien-Styrol, Polyetherimid, Harnstoff-Formaldehydharz, Polyethylenterphtalat oder eine Keramik mit geringer Wärmeleitfähigkeit wie Zirkonoxid. Aus diesen Materialien werden beispielsweise Paarungen eines ersten und eines zweiten Materials ausgewählt, die die vorstehenden Bedingungen für die Wärmeleitfähigkeiten aufweisen.

Mehrere Halteteile, insbesondere alle Halteteile der Probenhalterung, können untereinander im Wesentlichen dieselbe Form und/oder Größe aufweisen. Hierdurch können die Halteteile ein und derselben Messvorrichtung unterschiedlich angeordnet werden, um die Probe zu fixieren. Hierdurch sind verschiedene Konfigurationen der Messvorrichtung möglich. Die verschiedenen Konfigurationen ermöglichen die Messung der Wärmeleitfähigkeit in unterschiedlichen Raumrichtungen durch die Probe mittels derselben Messvorrichtung und derselben Probe. Ferner vereinfacht die Ausbildung der Halteteile in derselben Form und Größe die Berechnung der Wärmeleitfähigkeit anhand der Temperaturmesswerte. Alternativ ist es aber selbstverständlich auch möglich, dass z.B. die Querschnitte des oder der ersten und zweiten Halteteile unterschiedlich sind.

Zumindest zwei der Halteteile der Probenhalterung können vertauschbar anordenbar sein. Hierdurch wird eine besonders hohe Variabilität und besonders einfache Änderung der Konfiguration der Messvorrichtung ermöglicht.

Beispielsweise stehen zumindest ein erstes Halteteil und zumindest ein zweites Halteteil in Berührung mit der Probe oder sind zur Messung der Wärmeleitfähigkeit der Probe in Berührung damit bringbar.

Optional sind die Halteteile derart angeordnet oder anordenbar, dass eine der Wärmequelle und/oder eine der Wärmesenke zugewandte Seite der Probe (jeweils) nur teilweise von den Halteteilen bedeckt ist/sind.

Optional sind nicht alle der Halteteile entlang derselben Achse angeordnet (oder zur Messung der Wärmeleitfähigkeit der Probe entlang derselben Achse anordenbar), sondern z.B. entlang zueinander versetzter Achsen.

Es sind zumindest zwei erste Halteteile und zumindest zwei zweite Halteteile vorgesehen. Dies erlaubt eine einfache Messung der Wärmeleitfähigkeit in unterschiedlichen Raumrichtungen durch die Probe.

Zwei erste Halteteile sind auf gegenüberliegenden Seiten der Probe angeordnet oder anordenbar. Zusätzlich sind zwei zweite Halteteile auf gegenüberliegenden Seiten der Probe angeordnet oder anordenbar. Hierdurch können die Halteteile mit unterschiedlichen Wärmeleitfähigkeiten so angeordnet werden, dass eine Messung der Wärmeleitfähigkeit einer Probe mit besonders hoher Wärmeleitfähigkeit ermöglicht wird.

Die zumindest zwei ersten Halteteile und/oder die zumindest zwei zweiten Halteteile können senkrecht zu einer Wärmeflussrichtung von der Wärmequelle zur Wärmesenke (und/oder senkrecht zu einer kürzesten Geraden zwischen der Wärmequelle und der Wärmesenke) versetzt zueinander angeordnet oder anordenbar sein. Dies ermöglicht eine besonders gute Messung der Wärmeleitfähigkeit der Probe quer zur Dicke der Probe (und/oder quer zu einer kürzesten Geraden zwischen der Wärmequelle und der Wärmesenke).

Die Halteteile sind derart angeordnet oder anordenbar, dass bei einem Wärmefluss von der Wärmequelle zur Wärmesenke die Wärmeflussrichtung durch die Probe senkrecht zur Wärmeflussrichtung durch eines oder mehrere der Halteteile verläuft, wenn die Probe mittels der Probenhalterung fixiert ist, insbesondere um eine Messung der Wärmeleitfähigkeit der Probe quer zur Dicke der Probe zu ermöglichen.

Die Probenhalterung kann mehrere, z.B. zwei, drei oder vier Halteteile umfassen, die eingerichtet sind, die Wärmequelle mit der Probe wärmeleitend zu verbinden. Alternativ oder zusätzlich umfasst die Probenhalterung mehrere, z.B. zwei, drei oder vier Halteteile (insbesondere die gleiche Anzahl wie Halteteile, die die Wärmequelle mit der Probe wärmeleitend verbinden), die eingerichtet sind, die Probe wärmeleitendend mit der Wärmesenke zu verbinden. Hierdurch sind besonders vielfältige Messungen der Wärmeleitfähigkeit in verschiedenen Raumrichtungen durch die Probe möglich.

Die Haltevorrichtung umfasst bevorzugt ein Spannmittel, welches eingerichtet ist, eine Kraft auf die Probenhalterung und damit auf die Probe auszuüben. Ein vom Spannmittel erzeugter Kraftfluss verläuft durch jeweils zumindest ein Halteteil beiderseits der Probe, insbesondere durch alle Halteteile der Probenhalterung. Das Spannmittel kann so ausgebildet sein, dass es eine spezifische Kraft ausübt, insbesondere derart, dass die Halteteile mit einem vorbestimmten Druck gegen die Probe gepresst werden. Das Spannmittel umfasst optional einen Drucksensor, der den vom Spannmittel ausgeübten Druck oder die vom Spannmittel ausgeübte Kraft angibt. Optional wird die Kontaktrauhigkeit in die Bestimmung der Wärmeleitfähigkeit einbezogen.

Die Temperatursensoranordnung umfasst mehrere Temperatursensoren, die an zumindest einem der Halteteile angeordnet sind. Insbesondere kann die Temperatursensorvorrichtung mehrere Temperatursensoren, die an einem der Halteteile angeordnet sind, und mehrere weitere Temperatursensoren, die an einem weiteren der Halteteile angeordnet sind, umfassen.

Die Messvorrichtung kann mehrere (insbesondere voneinander beabstandete) Wärmequellen und/oder mehrere (insbesondere voneinander beabstandete) Wärmesenken umfassen. Die mehreren Wärmequellen und/oder Wärmesenken können jeweils auf einander gegenüberliegenden Seiten der Probe angeordnet oder anordenbar sein. Hierdurch lassen sich Wärmeflüsse erzeugen, die präzise Messungen von Wärmeleitfähigkeiten ermöglichen können. Die Wärmequelle(n) und/oder Wärmesenke(n) werden bevorzugt so angeordnet und eingerichtet, dass sich ein (im Wesentlichen) linearer thermischer Gradient einstellt.

Das genannte Problem wird auch durch ein Verfahren zur Messung einer Wärmeleitfähigkeit einer Probe gemäß Anspruch 14 gelöst.

Ein solches Verfahren umfasst die folgenden Schritte:

- Bereitstellen einer Messvorrichtung nach einer beliebigen, hierin beschriebenen Ausführung;
- Fixieren einer Probe mittels der Probenhalterung der Messvorrichtung;
- Erzeugen eines Temperaturgradienten mittels der Wärmequelle und der Wärmesenke der Messvorrichtung; und
- Bestimmen der Wärmeleitfähigkeit der Probe unter Verwendung von mittels der Temperatursensoranordnung der Messvorrichtung bestimmter Temperaturmesswerte und des durch die Wärmequelle bereitgestellten Wärmestroms.
- Das Bestimmen der Wärmeleitfähigkeit kann insbesondere das Wiederholen der Schritte des Fixierens einer Probe, des Erzeugens eines Temperaturgradienten und des Bestimmens von Temperaturmesswerten mit mehreren Proben aus dem gleichen Material mit unterschiedlichen Schichtdicken umfassen.

Hierdurch kann es ermöglicht werden, die Wärmeleitfähigkeit in einer Richtung quer zur Probendicke zu bestimmen. Die verschiedenen Wärmeleitfähigkeiten der Halteteile können zudem besonders genaue Messungen ermöglichen, insbesondere von stark wärmeleitenden Probenmaterialien.

Die Erfindung wird nachfolgend unter Bezugnahme auf die Figuren anhand von Ausführungsbeispielen näher erläutert werden. Es zeigen in schematischen Darstellungen:

Fig. 1A    eine Messvorrichtung zur Messung einer Wärmeleitfähigkeit einer Probe mit einer Probenhalterung mit zwei ersten und zwei zweiten Halteteilen;

Fig. 1B    Teile der Messvorrichtung gemäß Fig. 1A in einer anderen Anordnung;

Fig. 1C    mögliche alternative Anordnungen der vier Halteteile der Messvorrichtung gemäß Fig. 1A in einer perspektivischen Ansicht;

Fig. 2    mögliche alternative Anordnungen von sechs Halteteilen für die Messvorrichtung gemäß Fig. 1A in einer perspektivischen Ansicht;

Fig. 3    mögliche alternative Anordnungen von acht Halteteilen für die Messvorrichtung gemäß Fig. 1A in einer perspektivischen Ansicht;

Fig. 4    mögliche alternative Anordnungen von zwei Halteteilen für die Messvorrichtung gemäß Fig. 1A in einer perspektivischen Ansicht;

Fig. 5    eine mögliche alternative Anordnung von Komponenten der Messvorrichtung gemäß Fig. 1A in einer perspektivischen Ansicht;

Fig. 6    eine mögliche alternative Anordnung von acht Halteteilen, zwei Wärmequellen und zwei Wärmesenken für die Messvorrichtung gemäß Fig. 1A in einer perspektivischen Ansicht;

Fig. 7    eine mögliche alternative Anordnung von vier Halteteilen für die Messvorrichtung gemäß Fig. 1A in einer perspektivischen Ansicht;

Fig. 8    einen linearen Zusammenhang zwischen einer Position von Temperatursensoren und gemessen Temperaturen;

Fig. 9    Wärmewiderstände der Messvorrichtung gemäß Fig. 1A;

Fig. 10 ein Verfahren zur Messung einer Wärmeleitfähigkeit einer Probe; und

Fig. 11 eine mögliche alternative Anordnung von Komponenten der Messvorrichtung gemäß Fig. 1A in einer perspektivischen Ansicht.

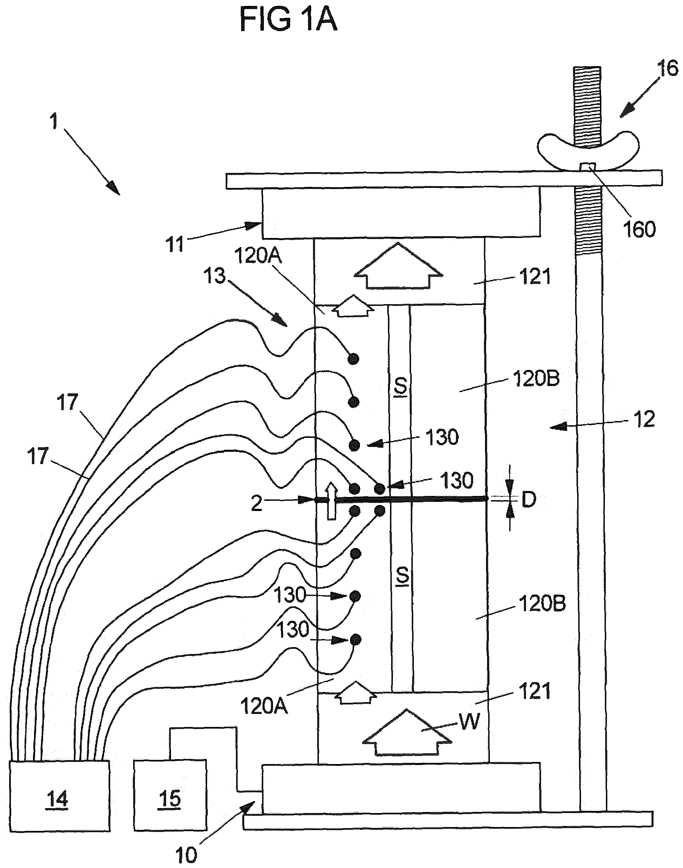

Fig. 1A zeigt eine Messvorrichtung 1 zur Messung einer Wärmeleitfähigkeit einer Probe 2. Die Messvorrichtung 1 umfasst eine Wärmequelle 10 und eine Wärmesenke 11. Zwischen der Wärmequelle 10 und der Wärmesenke 11 ist eine Probenhalterung 12 angeordnet. Die Probenhalterung fixiert die Probe 2, und zwar vorliegend zwischen der Wärmequelle 10 und der Wärmesenke 11. Die Probe 2 ist hier in Form eines Festkörpers, nämlich eines (z.B. scheibenförmigen) Plättchens oder in Form einer pastösen oder thixotropen Masse ausgebildet. Die Probe 2 hat zwei parallele, plane, einander gegenüberliegende Oberflächen, die mit der Probenhalterung 12 in Berührung stehen und die beiden großen Oberflächen der plättchenförmigen Probe 2 bilden. Die Messvorrichtung 1 umfasst ferner insbesondere eine Temperatursensoranordnung 13, auf die weiter unten im Detail eingegangen werden wird.

Die Wärmequelle 10 ist vorliegend in Form einer elektrischen Heizung ausgebildet, wobei auch andere Arten eine Wärmequelle denkbar sind. Die Wärmequelle 10 ist an ein Netzteil 15 angeschlossen, welches die Wärmequelle 10 mit elektrischem Strom versorgt. Auf diese Weise ist es möglich, eine definierte Wärmemenge zu erzeugen und abzugeben.

Die Wärmequelle 10 steht in wärmeleitendem Kontakt mit einer oder mehreren der (warmen) Komponenten der Probenhalterung 12. Eine oder mehrere der (kalten) Komponenten der Probenhalterung 12 stehen ferner in wärmeleitendem Kontakt mit der Wärmesenke 11.

Bei der Messvorrichtung 1 gemäß Fig. 1A steht ein optionaler Verbindungsblock 121 der Probenhalterung 12 in flächiger Anlage mit der Wärmequelle 10. Der Verbindungsblock 121 steht ferner in flächiger Anlage mit mehreren Halteteilen, vorliegend mit einem ersten Halteteil 120A und einem zweiten Halteteil 120B. Die Halteteile 120A, 120B stehen wiederum jeweils in flächiger Anlage mit einer der Wärmequelle 10 zugewandten Oberfläche der genannten beiden Oberflächen der Probe 2.

Parallel zur der Wärmequelle 10 zugewandten Oberfläche weist die Probe 2 eine der Wärmesenke 11 zugewandte Oberfläche auf. An der der Wärmesenke 11 zugewandten Oberfläche steht die Probe 2 in flächiger Anlage mit einem weiteren ersten Halteteil 120A und einem weiteren zweiten Halteteil 120B. An ihren der Probe 2 abgewandten Seiten stehen die weiteren Halteteile 120A, 120B in flächiger Anlage mit einem weiteren Verbindungsblock 121. Der weitere Verbindungsblock 121 steht in wärmeleitender Verbindung mit der Wärmesenke 11. Die Wärmesenke 11 umfasst z.B. Kühlrippen oder eine Wasserkühlung.

Die Verbindungsblocks 121 sind aus einem Wärmeleiter hergestellt, beispielsweise aus dem ersten Material. Optional sind die Verbindungsblocks 121 einstückig mit dem jeweiligen ersten Halteteil 120A ausgebildet und bilden einen Teil dieses jeweiligen ersten Halteteils 120A.

Jedes der Halteteile 120A, 120B der Probenhalterung 12 übt eine Haltekraft auf die Probe 2 aus, wenn die Probe 2 in der Probenhalterung 12 bestimmungsgemäß fixiert ist.

Die beiden ersten Halteteile 120A bestehen (wenn man von optionalen Beschichtungen der ersten und/oder zweiten Halteteile 120A, 120B absieht) aus einem ersten Material, die beiden zweiten Halteteile 120B aus einem zweiten Material. Dabei ist vorgesehen, dass das erste Material eine andere, nämlich vorliegend eine höhere Wärmeleitfähigkeit aufweist als das zweite Material. Das erste Material ist ein Wärmeleiter, das zweite Material ist ein Wärmeisolator. Ein Wärmeleiter leitet Wärme wesentlich besser als der Wärmeisolator. Im gezeigten Beispiel ist das erste Material Aluminium oder eine Aluminiumlegierung mit einer Wärmeleitfähigkeit von typischerweise mehr als 75 W/(m·K). Das zweite Material ist Polyetheretherketon (PEEK) mit einer Wärmeleitfähigkeit von typischerweise 0,25 W/(m·K). Alternativ sind andere Paarungen von Materialien möglich, wobei es vorteilhaft sein kann, wenn die Wärmeleitfähigkeit des ersten Materials zumindest fünfmal so groß, insbesondere etwa eine Größenordnung größer ist als die Wärmeleitfähigkeit des zweiten Materials.

Die von der Wärmequelle 10 abgegebene Wärme fließt somit entlang einer Wärmeflussrichtung W (in Fig. 1A durch Pfeile symbolisiert) durch das (warme) erste Halteteil 120A, durch die Probe 2 und durch das weitere (kalte) erste Halteteil 120A zur Wärmesenke 11. Über die zweiten Halteteile 120B fließt nur ein vernachlässigbarer Anteil der Wärme. Durch den Einsatz der zweiten Halteteile 120B wird gegenüber einer Konfiguration mit Halteteilen, die allesamt aus dem ersten Material bestehen, die Querschnittsfläche der Probe 2, durch die Wärme fließt, deutlich verkleinert und so die Wärmestromdichte angepasst. Hierdurch ist es möglich, Proben 2 mit sehr großen Wärmeleitfähigkeiten zu vermessen. Gleichzeitig ist aber eine stabile Halterung der Probe 2 durch die zweiten Halteteile 120B sichergestellt, was z.B. bei dünnen und flexiblen Folienmaterialien als Probe wichtig sein kann.

Die Wärmequelle 10 ist eingerichtet, einen konstanten Wärmestrom bereitzustellen. Die Wärmesenke 11 nimmt bei einer konstanten Temperatur pro Zeiteinheit eine konstante Wärmemenge auf. Hierdurch stellt sich in der Messvorrichtung 1 ein Gleichgewichtszustand ein. In diesem Gleichgewichtszustand liegt ein Temperaturprofil vor mit Temperaturen, die innerhalb der ersten Halteteile 120A einen linearen Verlauf aufweist (mit einem Temperaturgradienten in Richtung von der Wärmesenke 11 zur Wärmequelle 10).

Zur Messung dieses Temperaturprofils umfasst die Messvorrichtung 1 die Temperatursensoranordnung 13. Hierzu ist die Temperatursensoranordnung 13 ausgebildet, an mehreren Stellen des Wärmeflusses von der Wärmequelle 10 zur Wärmesenke 11 beiderseits der Probe 2 Temperaturmesswerte zu ermitteln. Die Temperatursensoranordnung 13 umfasst mehrere Temperatursensoren 130. Grundsätzlich würden zwei entlang des Wärmeflusses beabstandete Temperatursensoren 130 auf beiden Seiten der Probe 2 bereits ausreichen, sogar mit nur insgesamt drei Temperatursensoren 130 ist eine Messung möglich. Vorliegend umfasst die Temperatursensoranordnung 13 beiderseits der Probe 2 aber jeweils eine Vielzahl, nämlich fünf Temperatursensoren 130, wobei jeweils vier Temperatursensoren 130 entlang der Wärmeflussrichtung W beabstandet zueinander an einem der ersten Halteteile 120A angeordnet sind. Jeweils ein weiterer (optionaler) Temperatursensor 130 ist senkrecht zur Wärmeflussrichtung W beabstandet von einem der anderen Temperatursensoren 130 angeordnet, vorliegend jeweils in demselben Abstand zur Probe 2 wie dieser eine der anderen Temperatursensoren 130. Hierdurch ist eine besonders hohe Messgenauigkeit nahe der Probe 2 erzielbar.

Die Temperatursensoren 130 sind gemäß Fig. 1A jeweils in Form eines Widerstandsthermometers (Resistance Temperature Device, RTD) ausgebildet, wobei auch andere Arten vom Temperatursensoren oder Thermoelementen möglich sind.

Die Temperatursensoren 130 sind z.B. an der Oberfläche des jeweiligen ersten Halteteils 120A befestigt. Alternativ sind die Temperatursensoren 130 im Material des ersten Halteteils 120A eingebettet oder in entsprechenden Aufnahmen darin eingebracht.

Die Temperaturmesswerte der Temperatursensoren 130 werden von einer Auswerteeinheit 14 der Messvorrichtung 1 erfasst, die hierzu über Kabelverbindungen 17 mit jedem der Temperatursensoren 130 wirkverbunden ist.

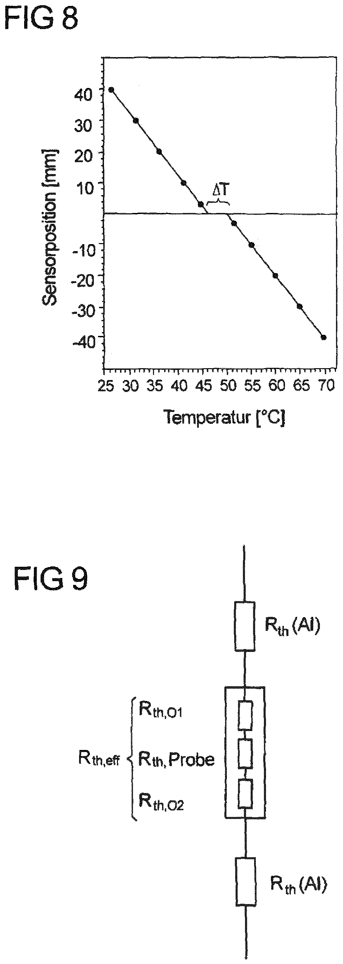

Fig. 8 zeigt ein auf diese Weise gemessenes Temperaturprofil, wobei die Sensorposition als der Abstand des Temperatursensors 130 von der ihm zugewandten Oberfläche der Probe 2 gegen die mittels dem Temperatursensor 130 gemessene Temperatur aufgetragen ist. Wie in Fig. 8 gezeigt, ergibt sich hierbei beiderseits der Probe 2 ein Verlauf entlang jeweils einer die Messpunkte verbindenden Geraden. Die Genauigkeit der Geraden kann verbessert werden, indem jeweils eine lineare Regression über die einzelnen Messpunkte beiderseits der Probe 2 durchgeführt wird. Die beiden Geraden sind entlang der Temperaturachse um einen Wert ΔT zueinander versetzt. Dieser Wert ΔT ist proportional zum effektiven Wärmewiderstand $R_{th.eff}$ der Probe 2:

$$R_{th,eff} = \frac{\Delta T}{\acute{Q}}$$

wobei $\acute{Q}$ den Wärmestrom durch die Probe 2 angibt. Der Wärmestrom $\acute{Q}$ ergibt sich durch die mittels des Netzteils 15 bereitgestellte elektrische Leistung und/oder durch eine entsprechende Messung.

Wie in Fig. 9 veranschaulicht, entspricht der effektive Wärmewiderstand $R_{th,eff}$ der Summe des Wärmewiderstandes der Probe $R_{th,Probe}$ und der thermischen Kontaktwiderstände $R_{tn,O1}$, $R_{th,O2}$ an den Grenzflächen zwischen der Probe 2 und den jeweiligen ersten Halteteilen 120A. In Fig. 9 sind ferner die Wärmewiderstände der ersten Halteteile 120A dargestellt.

Die Wärmeleitfähigkeit λ lässt sich bekanntermaßen wie folgt aus dem Wärmewiderstand der Probe $R_{th,Probe}$ berechnen:

$$\lambda = \frac{D}{R_{th,Probe} \cdot A}$$

wobei D die Dicke der Probe 2 angibt und A die vom Wärmefluss durchflossene Querschnittsfläche der Probe 2 (senkrecht zur Dicke der Probe 2).

Werden mehrere Messungen mit demselben Probenmaterial mit mindestens zwei Proben 2 unterschiedlicher Dicke D durchgeführt und die gemessenen effektiven Wärmewiderstände $R_{th,eff}$ gegen die Probendicke aufgetragen, lässt sich die Wärmeleitfähigkeit λ anhand der Steigung der sich daraus ergebenden Geraden bestimmen. Hierzu kann zur Verbesserung der Genauigkeit die Anzahl der gemessenen Proben erhöht und/oder ebenfalls eine lineare Regression angewandt werden. Die vorgenannten Berechnungen sind mittels der hierzu ausgebildeten Auswerteeinheit 14 durchführbar.

Die Messvorrichtung 1 kann eine optische oder mechanische Messeinrichtung zur Charakterisierung der Probenschichtdicke aufweisen.

Die thermischen Kontaktwiderstände $R_{th,O1}$, $R_{th,O2}$ hängen vom Druck ab, mit dem die ersten Halteteile 120A gegen die Probe 2 gepresst werden. Die Messvorrichtung 1 umfasst ein Spannmittel 16 in Form einer Schraubzwinge, welches die Halteteile 120A, 120B beiderseits der Probe 2 gegen die Probe 2 presst. Alternativ oder zusätzlich kann das Spannmittel 16 auch pneumatisch, hydraulisch oder mittels einer oder mehreren Federn einen Druck aufbauen. Um bei verschiedenen Messungen jeweils denselben Druck aufzubauen, umfasst das Spannmittel 16 einen entsprechenden Druckfühler 160, der den ausgeübten Druck anzeigen kann und/oder mit der Auswerteeinheit 14 wirkverbunden ist. Zusätzlich zu mehreren Messungen mit unterschiedlicher Probendicke können auch mehrere Messungen mit unterschiedlichem Anpressdruck durch das Spannmittel 16 vorgenommen werden, um die Druckabhängigkeit der effektiven Wärmeleitfähigkeit λ zu bestimmen.

Es sei darauf hingewiesen, dass die Verbindungsblocks 121 optional sind und zur sicheren Halterung der Halteteile 120A, 120B und/oder zur homogenen Verteilung der Wärme der Wärmequelle dienen können. Ebenso könnten die Halteteile 120A, 120B aber auch mit der Wärmequelle 10 und/oder der Wärmesenke 11 ohne Zwischenschaltung eines Verbindungsblocks 121 in Berührung stehen.

Die Halteteile 120A, 120B sind vorliegend in Form von Halteblöcken oder Haltebalken ausgebildet und weisen allesamt im Wesentlichen dieselbe Form (nämlich insbesondere die eines Quaders) und Größe auf.

Die ersten Halteteile 120A und die zweiten Halteteile 120B sind voneinander beabstandet angeordnet. Zwischen den ersten und zweiten Halteteilen 120A, 120B und der Probe 2 ist auf beiden Seiten der Probe 2 jeweils ein Spalt S ausgebildet. Vorliegend ist der Spalt konkret ein Luftspalt, alternativ ist es möglich, dass der Spalt z.B. mit einem Isolationsmaterial wie einem Aerogel oder einem Schaumharz teilweise oder vollständig gefüllt ist. Die Breite der Spalte S ist variierbar durch seitliches Verschieben der ersten und/oder zweiten Halteteile 120A, 120B vor dem Festspannen des Spannmittels 16.

Gemäß Fig. 1A sind die ersten Halteteile 120A so angeordnet, dass die Wärmeflussrichtung durch die Probe 2 parallel zur Dicke D der Probe 2 verläuft. Die ersten und zweiten Halteteile 120A, 120B an der der Wärmequelle 10 zugewandten Seite der Probe 2 sind spiegelbildlich (Achsenspiegelung) zu den ersten und zweiten Halteteilen 120A, 120B an der der Wärmesenke 11 zugewandten Seite der Probe 2 angeordnet.

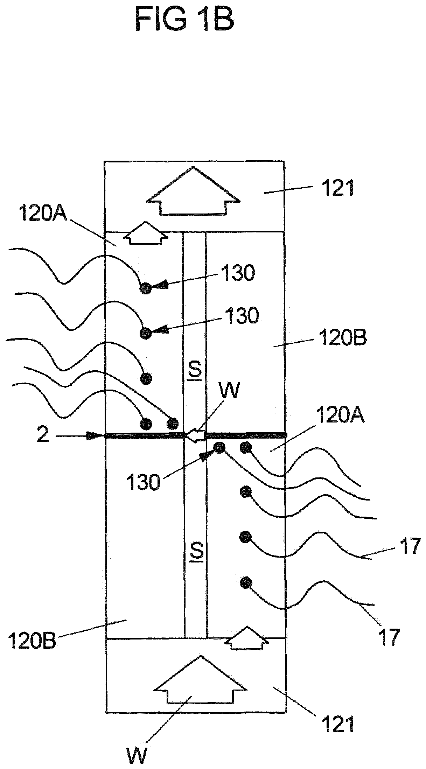

Fig. 1B zeigt die Verbindungsblocks 121 und die Halteteile 120A, 120B der Messvorrichtung 1 gemäß Fig. 1A, jedoch in einer anderen Anordnung als in Fig. 1A. Die übrigen Komponenten der Messvorrichtung 1 sind in Fig. 1B der einfachen Übersicht halber nicht erneut dargestellt. Die Halteteile 120A, 120B der Probenhalterung 12 sind über Kreuz anordenbar. Gemäß Fig. 1B sind die ersten und zweiten Halteteile 120A, 120B über Kreuz angeordnet. Dadurch ergibt sich innerhalb der Probe 2 eine Wärmeflussrichtung W (zumindest abschnittsweise) senkrecht zur Dicke der Probe 2. Auf diese Weise ist es möglich, mit der Messvorrichtung 1 (mit den gemäß Fig. 1B angeordneten Halteteilen 120A, 120B) die Wärmeleitfähigkeit der Probe 2 in einer Raumrichtung senkrecht zur Dicke D der Probe 2 zu messen, also parallel zu den beiden großen Oberflächen der Probe 2. Als Probe 2 kann z.B. ein Akkumulator verwendet werden, wie etwa eine Li-Ionenzelle mit einem komplexen, anisotropen inneren Aufbau.

Jeweils einer der Temperatursensoren 130 ist dabei nahe des Spalts S und nahe der Probe 2 angeordnet, was eine besonders genaue Messung erlaubt.

Die Breite der Spalte S ist auch in dieser Anordnung variierbar durch seitliches Verschieben der ersten und/oder zweiten Halteteile 120A, 120B vor dem Festspannen des Spannmittels 16. Hierdurch ist das Verhältnis der Querschnittsfläche der Probe 2 quer zur Wärmeflussrichtung W zur Strecke des Wärmeflusses durch die Probe einstellbar.

Die Messvorrichtung 1 erlaubt es somit, eine Probe 2 in der Form eines Plättchens so einzuspannen, dass die Haltekraft des Spannmittels 16 parallel zur Dicke der Probe wirkt, die Wärmeleitfähigkeit aber senkrecht zur Dicke der Probe gemessen werden kann. Dies hat den Vorteil einer einfachen Fixierung der Probe. Zudem kann dieselbe Probe 2 verwendet werden, um die Wärmeleitfähigkeit mit derselben Messvorrichtung 1 in unterschiedlichen Raumrichtungen zu messen. Da einige Materialien spröde sind, ist eine Herstellung von Plättchen z.B. quer zu einer Faserrichtung oftmals nicht oder nur mit großen Ungenauigkeiten oder mit großem Aufwand möglich. Dabei kann es zudem zu großen Messungenauigkeiten kommen, insbesondere wenn die Fasern gewellt sind.

Die Halteteile 120A, 120B sind bei gelöstem Spannmittel 16 bewegbar, insbesondere herausnehmbar. Die Messvorrichtung 1 lässt sich somit in einfacher Weise in der Anordnung gemäß Fig. 1A und in der Anordnung gemäß Fig. 1B betreiben, um so durch Veränderung des Temperaturgradienten eine Messung der Wärmeleitfähigkeit in mehreren, insbesondere allen Raumrichtungen der Probe 2 zu bestimmen. Die Messvorrichtung 1 entspricht somit einem Bausatz, der auch noch weitere Halteteile 120A, 120B, eine weitere Wärmequelle 10 und/oder eine weitere Wärmesenke 11 umfassen kann. Alternativ können die Halteteile 120A, 120B aber auch fest an den Verbindungsblocks 121 befestigt sein oder direkt an Teilen des Spannmittels 16.

Gemäß den Fig. 1A und 1B sind die Temperatursensoren 130 der Temperatursensoranordnung 13 an den ersten Halteteilen 120A angebracht. Alternativ oder zusätzlich können aber auch weitere Temperatursensoren an einem oder allen der zweiten Halteteile 120B angebracht sein, z.B. für eine Erhöhung der Messgenauigkeit.

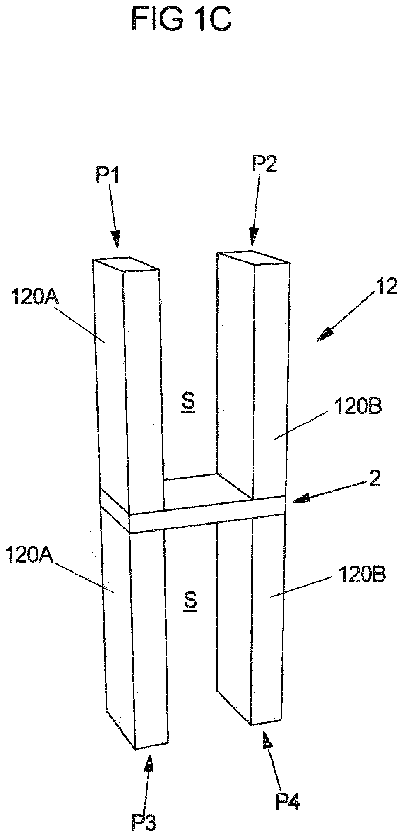

Fig. 1C zeigt in einer schematischen, perspektivischen Ansicht erneut die allgemeine Konfiguration der Halteteile 120A, 120B der Haltevorrichtung 1 gemäß Fig. 1A, wobei die übrigen Komponenten der Messvorrichtung 1 der einfachen Übersicht halber nicht dargestellt sind.

Gemäß Fig. 1C werden vier Positionen P1-P4 bereitgestellt, an denen jeweils ein Halteteil 120A, 120B angeordnet ist. Eine erste Position P1 ist gemäß Fig. 1C links oben angeordnet, eine zweite Position P2 rechts oben, eine dritte Position P3 links unten und eine vierte Position P4 rechts unten. Dabei bedeutet "oben" die der Wärmesenke 11 zugewandte Seite der Probe 2 und "unten" die der Wärmequelle 10 zugewandte Seite (und der Wärmesenke 11 abgewandte Seite) der Probe 2. Die Probe 2 separiert die oberen und unteren Halteteile 120A, 120B entlang einer vertikalen Achse voneinander. Die Angaben "links" und "rechts" beziehen sich jeweils auf eine linke und eine rechte Seite der Probe 2, wobei die linke und die rechte Seite der Probe 2 in einer zur vertikalen Achse senkrechten horizontalen Achse zueinander versetzt sind.

Die nachstehende Tabelle 1 stellt eine Auswahl von möglichen Anordnungen von ersten Halteteilen 120A ("erstes Material") und zweiten Halteteilen 120B ("zweites Material") dar, wobei noch einige weitere Anordnungen möglich sind.

Tabelle 1: Auswahl möglicher Anordnungen mit vier Halteteilen.

| Variante | P1 | P2 | P3 | P4 |
|---|---|---|---|---|
| 1 | erstes Material | zweites Material | erstes Material | zweites Material |
| 2 | erstes Material | zweites Material | zweites Material | erstes Material |
| 3 | zweites Material | erstes Material | zweites Material | erstes Material |
| 4 | zweites Material | erstes Material | erstes Material | erstes Material |

Die Variante 1 entspricht der Anordnung gemäß Fig. 1A, die Variante 2 entspricht der Anordnung gemäß Fig. 1B. Die Variante 3 entspricht einer zur Variante 1 vertikal gespiegelten Anordnung. Die Variante 4 weist eine asymmetrische Anordnung auf. Nur auf einer Position P1 ist ein zweites Halteteil 120B angeordnet, während auf allen übrigen Positionen P2-P4 erste Halteteile 120A angeordnet sind. hierdurch ist es möglich, gleichzeitig eine (überlagerte) Messung in zwei zueinander senkrechten Raumrichtungen durch die Probe 2 durchzuführen. Hierzu umfasst die Temperatursensoranordnung 13 jeweils mehrere (entlang der Wärmeflussrichtung W beabstandete) Temperatursensoren 130 an jedem der ersten Halteteile 120A.

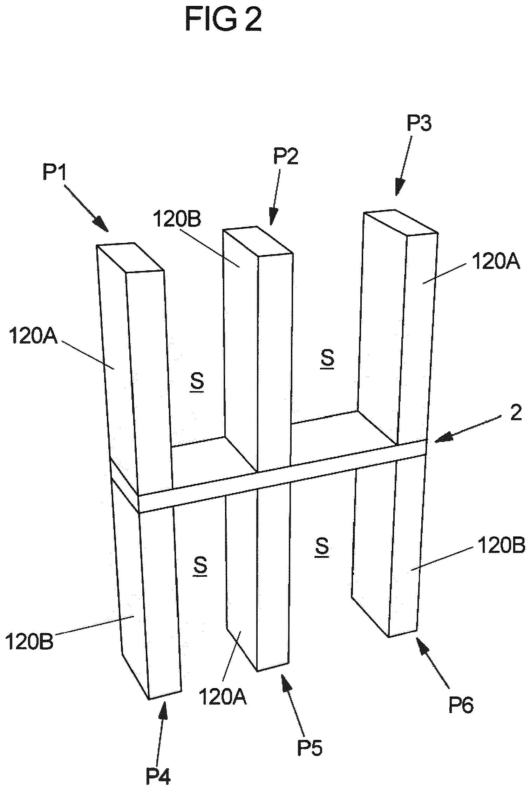

Fig. 2 zeigt in einer schematischen, perspektivischen Ansicht eine allgemeine Konfiguration mit insgesamt sechs Halteteilen 120A, 120B, wobei die übrigen Komponenten der in Fig. 1A gezeigten Messvorrichtung 1 der einfachen Übersicht halber nicht dargestellt sind.

Gemäß Fig. 2 werden sechs Positionen P1-P6 bereitgestellt, an denen jeweils ein Halteteil 120A, 120B angeordnet ist. Eine erste Position P1 ist gemäß Fig. 2 links oben angeordnet, eine zweite Position P2 oben mittig, eine dritte Position P3 rechts oben, eine vierte Position P4 links unten, eine fünfte Position P5 unten mittig und eine sechste Position P6 rechts unten. Wobei die Angaben "oben", "unten", "links" und "rechts" denen gemäß Fig. 1C entsprechen.

Die nachstehende Tabelle 2 stellt eine Auswahl von möglichen Anordnungen von ersten Halteteilen 120A ("erstes Material") und zweiten Halteteilen 120B ("zweites Material") an den Positionen P1-P6 gemäß Fig. 2 dar.

Tabelle 2: Auswahl möglicher Anordnungen mit sechs Halteteilen.

| Variante | P1 | P2 | P3 | P4 | P5 | P6 |
|---|---|---|---|---|---|---|
| 5 | erstes Material | zweites Material | erstes Material | zweites Material | erstes Material | zweites Material |
| 6 | erstes Material | erstes Material | zweites Material | zweites Material | erstes Material | erstes Material |
| 7 | erstes Material | zweites Material | erstes Material | erstes Material | zweites Material | erstes Material |
| 8 | erstes Material | zweites Material | zweites Material | zweites Material | zweites Material | erstes Material |

Die Variante 5 entspricht der Anordnung gemäß Fig. 2. Hier fließt die Wärme von der Wärmequelle 10 durch das erste Halteteil 120A an der (mittigen) fünften Position P5 in die Probe 2. In der Probe 2 teilt sich der Wärmestrom in zwei Teilströme (nach links und rechts) durch die Probe und weiter durch die beiden an der (äußeren) ersten Position P1 und an der (äußeren) dritten Position P3 angeordneten ersten Halteteile 120A. Hierdurch ist eine simultane doppelte Messung möglich, die die Messgenauigkeit in einem einzelnen Messvorgang deutlich erhöhen kann.

Die Variante 6 ermöglicht eine gleichzeitige Messung in mehreren Raumrichtungen durch die Probe 2. Mittels der ersten Halteteile 120A an der zweiten und fünften Position P2, P5 ist die Wärmeleitfähigkeit der Probe 2 parallel zur Dicke D der Probe 2 messbar. Mittels der ersten Halteteile 120A an der ersten und fünften Position P1, P5 und gleichzeitig mittels der ersten Halteteile 120A an der zweiten und sechsten Position P2, P6 ist jeweils eine Messung senkrecht zur Dicke D der Probe 2 möglich. Diese doppelte Messung ermöglicht eine hohe Messgenauigkeit.

Die Variante 7 ermöglicht eine zeitgleiche zweifache Messung der Wärmeleitfähigkeit der Probe 2 in einer Richtung entlang der Dicke D der Probe 2.

Bei der Variante 8 sind die ersten Halteteile 120A, durch die der Wärmefluss von der Wärmequelle zur Wärmesenke verläuft, in einer Richtung senkrecht zur Probendicke durch ein zweites Halteteil 120B voneinander beabstandet. Dies ermöglicht eine Messung senkrecht zur Dicke D der Probe 2, wobei die Wärme durch eine besonders lange Strecke durch die Probe 2 fließt. Hierdurch können Materialien mit besonders hoher Wärmeleitfähigkeit vermessen werden (z.B. mit einer Wärmeleitfähigkeit von 300 W/(m K) oder mehr).

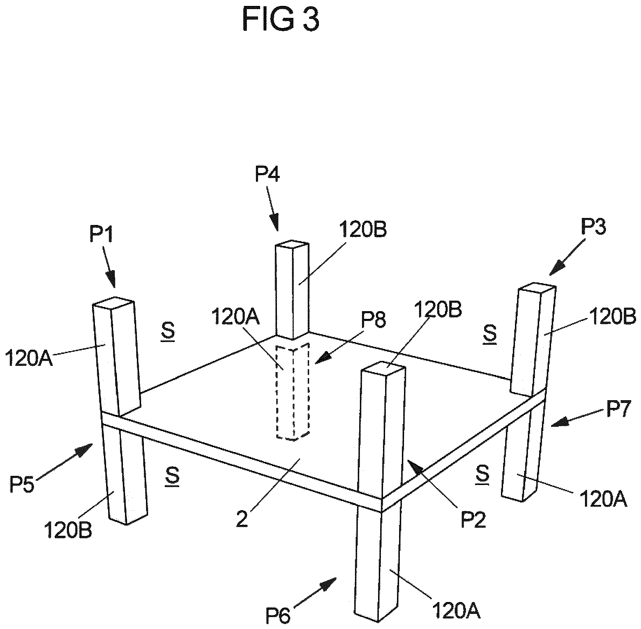

Fig. 3 zeigt in einer schematischen, perspektivischen Ansicht eine allgemeine Konfiguration mit insgesamt acht Halteteilen 120A, 120B, wobei die übrigen Komponenten der in Fig. 1A gezeigten Messvorrichtung 1 der einfachen Übersicht halber wieder nicht dargestellt sind.

Gemäß Fig. 3 werden acht Positionen P1-P8 bereitgestellt, an denen jeweils ein Halteteil 120A, 120B angeordnet ist. Die ersten vier Positionen P1-P4 sind auf der einen Seite (oberhalb) der Probe 2 angeordnet. Vorliegend sind die ersten vier Positionen P1-P4 an den vier Ecken der hier rechteckigen Probe 2 angeordnet. Die übrigen vier Positionen P5-P8 sind auf der gegenüberliegenden Seite (unterhalb) der Probe 2 angeordnet, vorliegend in demselben Muster wie die ersten vier Positionen P1-P4. Die Probe 2 ist an vier Stellen durch jeweils ein Paar von einander gegenüberliegenden Halteteilen 120A, 120B fixiert. Sämtliche Positionen P1-P8 sind voneinander beabstandet.

Die nachstehende Tabelle 3 stellt eine Auswahl von möglichen Anordnungen von ersten und zweiten Halteteilen 120A, 120B in der Anordnung gemäß Fig. 3 dar.

Tabelle 3: Auswahl möglicher Anordnungen mit acht Halteteilen.

| Variante | P1 | P2 | P3 | P4 | P5 | P6 | P7 | P8 |
|---|---|---|---|---|---|---|---|---|
| 9 | erstes Material | zweites Material | zweites Material | zweites Material | zweites Material | erstes Material | erstes Material | erstes Material |
| 10 | erstes Material | zweites Material | zweites Material | zweites Material | erstes Material | erstes Material | erstes Material | erstes Material |
| 11 | erstes Material | erstes Material | zweites Material | zweites Material | zweites Material | zweites Material | erstes Material | erstes Material |
| 12 | erstes Material | zweites Material | erstes Material | zweites Material | zweites Material | erstes Material | zweites Material | erstes Material |

Die Variante 9 entspricht der Anordnung gemäß Fig. 3. Hiermit können die Wärmeleitfähigkeiten in zwei senkrechten Raumrichtungen durch die Probe 2, jeweils senkrecht zur Dicke der Probe 2, simultan gemessen werden.

Die Variante 10 ermöglicht die gleichzeitige Messung der Wärmeleitfähigkeit der Probe in allen drei Raumrichtungen (eine der Raumrichtungen erstreckt sich dabei parallel zur Richtung der Dicke D der Probe 2).

Die Variante 11 ermöglicht eine zeitgleiche mehrfache Messung entlang derselben Raumrichtung senkrecht zur Dicke D der Probe 2. Dies erlaubt eine besonders hohe Genauigkeit.

Die Variante 12 ermöglicht eine Messung der durchschnittlichen Wärmeleitfähigkeit in beiden senkrechten Raumrichtungen senkrecht zur Dicke D der Probe 2.

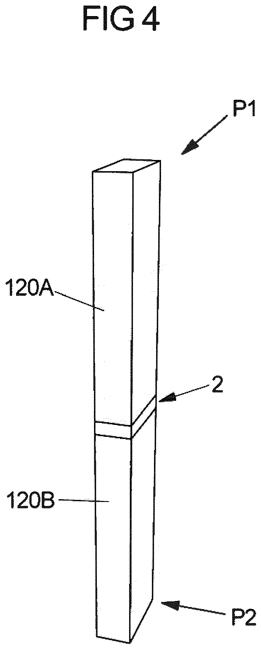

Fig. 4 zeigt in einer schematischen, perspektivischen Ansicht eine allgemeine Konfiguration mit insgesamt zwei Halteteilen 120A, 120B, wobei die übrigen Komponenten der in Fig. 1A gezeigten Messvorrichtung 1 der einfachen Übersicht halber wiederum nicht dargestellt sind. Das erste und das zweite Material der beiden Halteteile 120A, 120B sind hier beide keine Wärmeisolatoren, weisen aber eine voneinander unterschiedliche Wärmeleitfähigkeit auf. Temperatursensoren 130 der Temperatursensoranordnung 13 sind hier am ersten und am zweiten Halteteil 120A, 120B angebracht. Hierdurch ergibt sich in der Darstellung der Temperaturmesswerte gemäß Fig. 8 auf den beiden Seiten der Probe 2 eine unterschiedliche Steigung der jeweiligen Geraden.

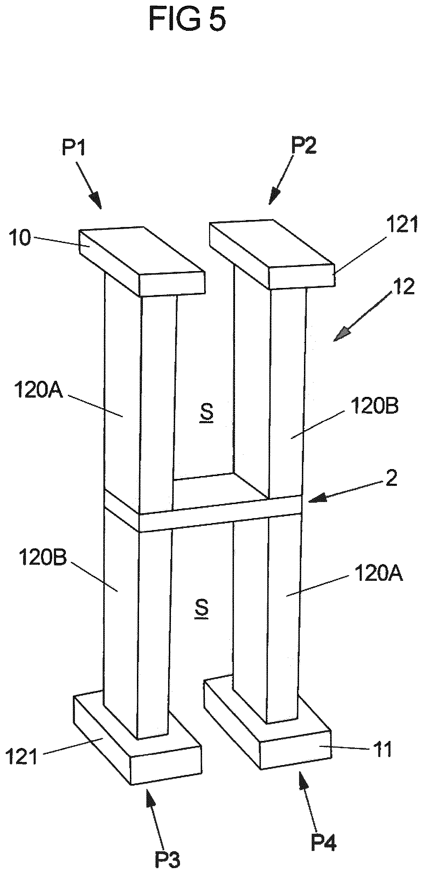

Fig. 5 zeigt eine weitere mögliche Anordnung der einzelnen Komponenten der Messvorrichtung 1 gemäß Fig. 1A, wobei die übrigen Komponenten der in Fig. 1A gezeigten Messvorrichtung 1 der einfachen Übersicht halber nicht dargestellt sind. Die Ansicht entspricht der Ansicht gemäß Fig. 1C. Anstatt übereinander (siehe Fig. 1A) sind die Wärmequelle 10 und der Verbindungsblock 121 nebeneinander angeordnet. Gemäß Fig. 5 steht die Wärmequelle 10 in wärmeleitender Verbindung mit dem ersten Halteteil 120A an der ersten Position P1. Die Wärmequelle 10 steht in keiner wärmeleitenden Verbindung mit dem zweiten Halteteil 120B (außer über die Probe 2) an der zweiten Position P2. Beispielsweise stellt das Spannmittel 16 eine Wärmeisolation der Wärmequelle 10 bereit und/oder der Verbindungsblock 121 umfasst oder besteht aus einem Wärmeisolator.

Auf der gegenüberliegenden Seite der Probe 2 stehen ein erstes und ein zweites Halteteil 120A, 120B in flächiger Anlage mit der Probe 2 und sind bezogen auf die zuvor genannten Halteteile 120A, 120B (an der warmen Probenseite) vertauscht angeordnet. Das weitere erste Halteteil 120A ist an der vierten Position P4 angeordnet und steht in wärmeleitender Verbindung mit der Wärmesenke 11. Das weitere zweite Halteteil 120B ist an der dritten Position P3 angeordnet und steht in flächiger Anlage mit dem weiteren Verbindungsblock 121. Die Verbindungsblocks 121 gleichen den Höhenunterschied der Wärmequelle 10 und der Wärmesenke 11 aus.

Auf diese Weise wird eine stärkere Wärmeisolation der zweiten Halteteile 120B erreicht.

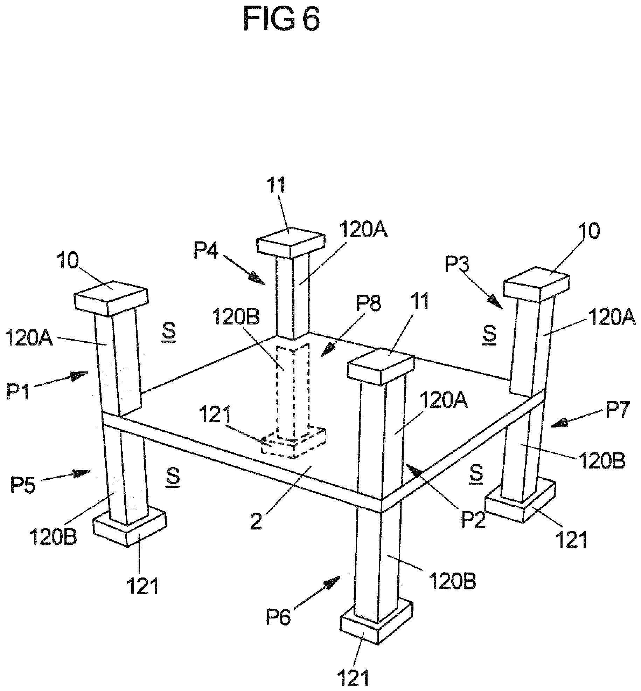

Fig. 6 zeigt eine weitere Konfiguration mit insgesamt acht Halteteilen 120A, 120B, wobei die übrigen Komponenten der in Fig. 1A gezeigten Messvorrichtung 1 der einfachen Übersicht halber nicht dargestellt sind.

Gemäß Fig. 6 sind zwei Wärmequellen 10 und zwei Wärmesenken 11 vorgesehen (wobei es alternativ auch denkbar wäre, eine Wärmequelle 10 und zwei Wärmesenken 11 oder zwei Wärmequellen 10 und eine Wärmesenke 11 vorzusehen).

Sämtliche Wärmequellen 10 und Wärmesenken 11 sind auf einer Seite der Probe 2 angeordnet. Jede der Wärmequellen 10 und Wärmesenken 11 steht über jeweils ein erstes Halteteil 120A mit der Probe 2 in wärmeleitender Verbindung. An den ersten vier Positionen P1-P4 ist jeweils ein erstes Halteteil 120A angeordnet. An der gegenüberliegenden Seite der Probe 2 ist an den übrigen vier Positionen P5-P8 jeweils ein zweites Halteteil 120B angeordnet. Optional dienen Verbindungsblöcke 121 zum Höhenausgleich beim Einspannen durch das Spannmittel 16 (siehe Fig. 1A). Es ist auch denkbar, mehrere oder alle der (vier) zweiten Halteteile 120B durch ein sich über mehrere, insbesondere über alle der fünften bis achten Position P5-P8 erstreckendes (großes) zweites Halteteil zu ersetzen.

Die Anordnung gemäß Fig. 6 ermöglicht eine zweidimensionale Messung der Wärmeleitfähigkeit der Probe 2. Die mit Anschlüssen oder Zuleitungen versehenen Komponenten sind alle auf einer Seite der Probe 2 angeordnet, was ein vereinfachtes Zusammensetzen der Messvorrichtung 1 erlaubt.

Generell ist es bei allen beschriebenen Varianten möglich, auch an einem oder an allen der zweiten Halteteile 120B Temperatursensoren anzubringen, z.B. in derselben Weise wie an den ersten Halteteilen 120A. Dies kann weitergehende Messungen erlauben, z.B. wenn sowohl durch die ersten Halteteile 120A als auch durch die zweiten Halteteile 120B ein nicht zu vernachlässigender Anteil der Wärme fließt. Dies kann z.B. dann der Fall sein, wenn weder das erste Material noch das zweite Material ein Wärmeisolator ist. Durch die unterschiedlichen Wärmeleitfähigkeiten des ersten und des zweiten Materials ergeben sich unterschiedliche Steigungen in einer der Fig. 8 entsprechenden Darstellung. Auf diese Weise können durch eine gleichzeitige Analyse der Temperaturmesswerte der Temperatursensoren 130 an den ersten und zweiten Halteteilen 120A, 120B besonders genaue Messungen erzielt werden.

Ferner ist es generell bei allen beschriebenen Varianten möglich, die Anordnung der Wärmequelle 10 und der Wärmesenke 11 zu vertauschen.

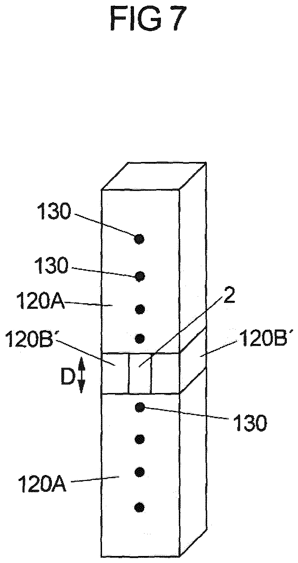

Fig. 7 zeigt eine weitere mögliche Anordnung von zwei ersten Halteteilen 120A und zwei zweiten Halteteilen 120B' für die Messvorrichtung 1 gemäß Fig. 1A. Die beiden ersten Halteteile 120A spannen die Probe 2 zwischen der Wärmequelle 10 und der Wärmesenke 11 ein (siehe Fig. 1A). Die Probe 2 weist eine kleinere Querschnittsfläche auf als die ersten Halteteile 120A, sodass sich zwischen dem äußeren Umriss der ersten Halteteile 120A und der Probe 2 Spalte ergeben (je nach Anordnung der Probe 2 ergibt sich zumindest ein Spalt). Die zweiten Halteteile 120B' füllen die Spalte aus. Im vorliegenden Beispiel weisen die zweiten Halteteile 120B' und die Probe 2 gemeinsam dieselbe Querschnittsfläche auf wie die ersten Halteteile 120A (entlang paralleler Flächen). Hierdurch können besonders schmale Proben 2 oder Proben 2 mit besonders großer Wärmeleitfähigkeit vermessen werden. Die zweiten Halteteile 120B' sind aus einem Wärmeisolator gefertigt und stützen die Probe 2, sodass diese trotz des Drucks durch das Spannmittel 16 nicht bricht.

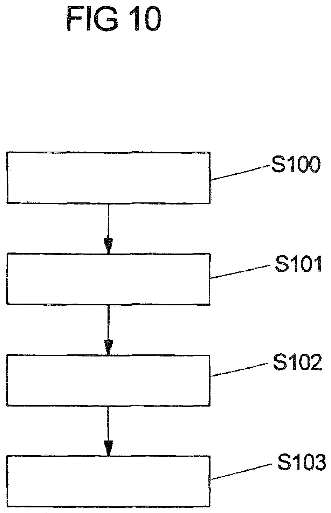

Fig. 10 zeigt ein Verfahren zur Messung der Wärmeleitfähigkeit der Probe 2 unter Verwendung einer beliebigen, hierin beschriebenen Messvorrichtung 1. Das Verfahren umfasst die folgenden Schritte:

In Schritt S100 wird die Messvorrichtung 1 bereitgestellt.

In Schritt S101 wird die Probe 2 mittels der Probenhalterung 12 der Messvorrichtung 1 fixiert, insbesondere durch Ausüben einer Haltekraft jedes der Halteteile 120A, 120B auf die Probe 2 infolge einer Krafteinwirkung des Spannmittels 16.

In Schritt S102 wird mittels der Wärmequelle 10 und der Wärmesenke 11 der Messvorrichtung 1 ein Temperaturgradient erzeugt. Es wird abgewartet, bis sich ein Gleichgewichtszustand mit einem konstanten Temperaturverlauf eingestellt hat.

In Schritt S103 wird die Wärmeleitfähigkeit der Probe 2 unter Verwendung von mittels der Temperatursensoranordnung 13 der Messvorrichtung 1 bestimmter Temperaturmesswerte bestimmt. Hierzu werden die bereits oben im Zusammenhang mit den Fig. 8 und 9 beschriebenen Berechnungen vorgenommen, vorzugsweise mittels der Auswerteeinheit 14.

Die Wärmestromdichte in der Probe 2 lässt sich über die Kontaktflächen zwischen den ersten Halteteilen 120A und der Probe 2 und über das Verhältnis des Probenquerschnitts zur Probendicke einstellen. Je nach der Größenordnung der Wärmeleitfähigkeit der Probe 2 kann somit eine der zuvor beschriebenen Anordnungen verwendet werden, die entsprechend große oder kleine Kontaktflächen aufweist. Bei einer großen Wärmeleitfähigkeit kann z.B. eine Anordnung mit nur einer vergleichsweise kleinen Kontaktflächen der Probe 2 mit den ersten Halteteilen 120A verwendet werden, z.B. eine der Varianten 8 oder 11. Es kann allgemein vorgesehen sein, dass das Verhältnis der Summe der Kontaktflächen der zweiten Halteteile 120B mit der Probe 2 zur Summe der Kontaktflächen der ersten Halteteile 120A mit der Probe 2 proportional zur Wärmeleitfähigkeit der Probe 2 gewählt wird. Das Verhältnis kann z.B. ein Zehntel oder ein Hundertstel (oder ein Wert dazwischen) des Werts der Wärmeleitfähigkeit der Probe in W/(m.K) sein.

Mit den beschriebenen Vorrichtungen und verfahren kann die Wärmeleitfähigkeit von anisotropen Materialen in allen Raumrichtungen (in der longitudinalen und den zwei transversalen Richtungen der Probe) ohne Kenntnis weiterer Stoffgrößen bestimmt werden. Zudem können Materialien in einem großen Messbereich, z.B. von 0,1 bis 400 W/(m·K) vermessen werden.

Unabhängig von den genannten Angaben zu "oben", "unten", "links" und "rechts" kann die Messvorrichtung 1 selbstverständlich in jeder räumlichen Lage eingesetzt oder konfiguriert werden. Beispielsweise ließe sich die in Fig. 1A gezeigte Messvorrichtung 1 auch um 90° oder 180° verschwenkt einsetzen.

Die Messvorrichtung 1 erlaubt es, die relative Ausrichtung der Probe 2 im thermischen Feld entlang aller Raumachsen zu wählen. Dadurch kann die Wärmeleitfähigkeit der Probe 2 unabhängig für alle Raumrichtungen im thermischen Gleichgewichtszustand (stationärer Zustand) separat vorgenommen werden. Ferner kann die Wärmestromdichte so reguliert werden, dass damit auch hohe und sehr hohe Wärmeleitfähigkeiten charakterisiert werden können. Stoffspezifische Werte sind für die Messung nicht notwendig.

Durch eine Rückkopplung der Temperaturen der Temperatursensoren 130 kann der Wärmefluss so reguliert werden, dass die Wartezeit bis zur Einstellung einer Temperaturkonstante vergleichsweise kurz ist. Mittels der Messvorrichtung 1 kann die Wärmestromdichte über die Kontaktfläche und über das Verhältnis des Probenquerschnitts zur Probenstrecke regulierbar sein. Hierdurch ist es möglich, Proben 2 mit sehr hohe Wärmeleitfähigkeit zu messen.

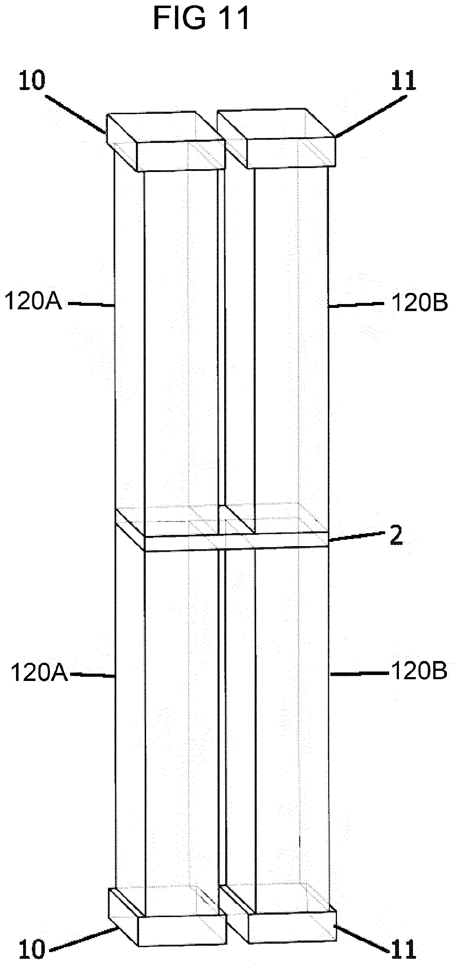

Fig. 11 zeigt eine weitere mögliche Anordnung von Wärmequellen 10, Wärmesenken 11 und Halteteilen 120A, 120B. In dieser Anordnung sind insgesamt vier Halteteile 120A, 120B vorgesehen, konkret zwei erste Halteteile 120A und zwei zweite Halteteile 120B. Im gezeigten Beispiel weisen alle Halteteile 120A, 120B jeweils die gleiche Form auf. Zwei Halteteile 120A, 120B sind auf einer Seite der Probe 2 angeordnet, zwei weitere Halteteile 120A, 120B auf der gegenüberliegenden Seite der Probe 2. Die Probe 2 ist zwischen zwei Paaren von Halteteilen 120A, 120B angeordnet. Jedes Paar von Halteteilen 120A, 120B umfasst ein erstes Halteteil 120A und ein zweites Halteteil 120B. Dabei sind die beiden ersten Halteteile 120A entlang einer gemeinsamen (ersten) Achse ausgerichtet. Die beiden zweiten Halteteile 120B sind entlang einer gemeinsamen (zweiten) Achse ausgerichtet. Die erste Achse und die zweite Achse sind versetzt zueinander (im gezeigten Beispiel parallel zueinander ausgerichtet). Auf jeder Seite der Probe sind die beiden Halteteile 120A, 120B voneinander beabstandet. Die beiden Halteteile 120A, 120B auf jeder Seite der Probe berühren einander nicht. Alle vier Halteteile 120A, 120B berühren die Probe 2. Die Probe 2 ist an einem ersten Bereich zwischen zwei Halteteile geklemmt, hier zwischen die beiden ersten Halteteilen 120A. An einem zweiten Bereich, der an den ersten Bereich angrenzt, steht die Probe 2 in Berührung mit keinem Halteteil. An einem dritten Bereich der Probe 2, der an den zweiten Bereich angrenzt, ist die Probe zwischen zwei Halteteile geklemmt, hier zwischen die beiden zweiten Halteteile 120B.

Gemäß Fig. 11 sind zwei Wärmequellen 10 und zwei Wärmesenken 11 vorgesehen, konkret eine Wärmequelle 10 und eine Wärmesenke 11 auf der einen Seite der Probe 2 und eine Wärmequelle 10 und eine Wärmesenke 11 auf der gegenüberliegenden Seite der Probe 2. Jedes der beiden ersten Halteteile 120A verbindet eine Wärmequelle 10 wärmeleitend mit der Probe 2. Jedes der beiden zweiten Halteteile 120B verbindet die Probe 2 wärmeleitend mit einer Wärmesenke 11.

Gemäß einer alternativen Ausgestaltung sind gegenüber Fig. 11 die ersten Halteteile 120A mit den zweiten Halteteilen 120B vertauscht angeordnet.

Gemäß einer weiteren alternativen Ausgestaltung sind auf einer Seite der Probe 2 das erste Halteteil 120A und das zweite Halteteil 120B gegenüber Fig. 11 vertauscht angeordnet.

**Bezugszeichenliste**

| | |
|---|---|
| 1 | Messvorrichtung |
| 10 | Wärmequelle |
| 11 | Wärmesenke |
| 12 | Probenhalterung |
| 120A | erstes Halteteil |
| 120B; 120B' | zweites Halteteil |
| 121 | Verbindungsblock |
| 13 | Temperatursensoranordnung |
| 130 | Temperatursensor |
| 14 | Auswerteeinheit |
| 15 | Netzteil |

| 16 | Spannmittel |
| 160 | Druckfühler |
| 17 | Kabelverbindung |
| 2 | Probe |
| D | Probendicke |
| P1-P8 | Position |
| S | Spalt |
| W | Wärmeflussrichtung |

## Patentansprüche

1. Messvorrichtung zur Messung einer Wärmeleitfähigkeit einer Probe (2), umfassend:

   - eine Wärmequelle (10),
   - eine Wärmesenke (11),
   - eine Probenhalterung (12) zur Fixierung der Probe mit mehreren zum Halten der Probe ausgebildeten Halteteilen (120A, 120B; 120B'), wobei zumindest ein Halteteil (120A, 120B) eingerichtet ist, die Wärmequelle (10) mit der Probe (2) wärmeleitend zu verbinden, und zumindest ein weiteres Halteteil (120A, 120B) eingerichtet ist, die Probe (2) wärmeleitendend mit der Wärmesenke (11) zu verbinden, und
   - eine Temperatursensoranordnung (13), die eingerichtet ist, zur Bestimmung der Wärmeleitfähigkeit der Probe (2) an zumindest drei Stellen zwischen der Wärmequelle (10) und der Wärmesenke (11) Temperaturmesswerte zu ermitteln,

   **dadurch gekennzeichnet, dass**
   zumindest ein erstes Halteteil (120A) der Probenhalterung (12) ein erstes Material umfasst und zumindest ein zweites Halteteil (120B; 120B') der Probenhalterung (12) ein zweites Material umfasst, wobei das erste Material eine andere Wärmeleitfähigkeit aufweist als das zweite Material, wobei jeweils zumindest zwei Halteteile (120A, 120B; 120B') derart auf gegenüberliegenden Seiten der Probe (2) angeordnet sind, dass eir Wärmefluss von der Wärmequelle (10) zur Wärmesenke (11) durch die Probe (2) senkrecht zur Wärmeflussrichtung (W) durch eines oder mehrere der Halteteile (120A, 120B; 120B') verläuft, wenn die Probe (2) mittels der Probenhalterung (12) fixiert ist, wobei zumindest zwei erste Halteteile (120A) und zumindest zwei zweite Halteteile (120B; 120B') vorgesehen sind, und wobei die zumindest zwei ersten Halteteile (120A) auf gegenüberliegenden Seiten der Probe (2) angeordnet sind und die zumindest zwei zweiten Halteteile (120B; 120B') auf gegenüberliegenden Seiten der Probe (2) angeordnet sind.

2. Messvorrichtung nach Anspruch 1, **dadurch gekennzeichnet, dass** die Wärmeleitfähigkeit des ersten Materials mindestens das Fünffache der Wärmeleitfähigkeit des zweiten Materials beträgt, insbesondere mindestens das Zehnfache, wobei das erste Material ein Wärmeleiter ist, insbesondere eine Wärmeleitfähigkeit von über 100 W/(m·K) aufweist, und das zweite Material ein Wärmeisolator ist, insbesondere eine Wärmeleitfähigkeit von unter 1 W/(m·K) aufweist.

3. Messvorrichtung nach einem der vorherigen Ansprüche, **dadurch gekennzeichnet, dass** die Halteteile (120A, 120B; 120B') derart angeordnet sind, dass ein Spalt (S) zwischen mehreren der Halteteile (120A, 120B; 120B') ausgebildet ist, wobei der Spalt (S) einstellbar ist und/oder zwischen zwei auf einer Seite der Probe (2) angeordneten Halteteilen (120A, 120B; 120B') ausgebildet ist.

4. Messvorrichtung nach einem der vorherigen Ansprüche, **dadurch gekennzeichnet, dass** das erste Material Aluminium und/oder das zweite Material Polyetheretherketon ist.

5. Messvorrichtung nach einem der vorherigen Ansprüche, **dadurch gekennzeichnet, dass** mehrere Halteteile (120A, 120B; 120B'), insbesondere alle Halteteile (120A, 120B; 120B') der Probenhalterung (12), untereinander im Wesentlichen dieselbe Form und/oder Größe aufweisen.

6. Messvorrichtung nach einem der vorherigen Ansprüche, **dadurch gekennzeichnet, dass** zumindest zwei der Halteteile (120A, 120B; 120B') der Probenhalterung (12) vertauschbar angeordnet sind.

7. Messvorrichtung nach einem der vorherigen Ansprüche, **dadurch gekennzeichnet, dass** zumindest ein erstes Halteteil (120A) und zumindest ein zweites Halteteil (120B; 120B') in Berührung mit der Probe (2) stehen oder bringbar sind.

8. Messvorrichtung nach einem der vorherigen Ansprüche, **dadurch gekennzeichnet, dass** die Halteteile (120A, 120B; 120B') derart angeordnet sind, dass eine der Wärmequelle (10) oder der Wärmesenke (11) zugewandte Seite der Probe (2) nur teilweise von den Halteteilen (120A, 120B; 120B') bedeckt ist.

9. Messvorrichtung nach einem der vorherigen Ansprüche, **dadurch gekennzeichnet, dass** nicht alle der Halteteile (120A, 120B; 120B') entlang derselben Achse angeordnet sind.

10. Messvorrichtung nach Anspruch 1, **dadurch gekennzeichnet, dass** durch die zweiten Halteteile (120B; 120B') kein wesentlicher Beitrag zum gesamten Wärmefluss fließt und/oder die zumindest zwei ersten Halteteile (120A) und/oder die zumindest zwei zweiten Halteteile (120B; 120B') senkrecht zu einer Wärmeflussrichtung (W) von der Wärmequelle (10) zur Wärmesenke (11) versetzt zueinander angeordnet sind.

11. Messvorrichtung nach einem der vorherigen Ansprüche, **gekennzeichnet durch** ein Spannmittel (16), welches eingerichtet ist, eine Kraft auf die Probenhalterung (12) und die Probe (2) auszuüben, wobei ein vom Spannmittel (16) erzeugter Kraftfluss insbesondere durch alle Halteteile (120A, 120B; 120B') der Probenhalterung (12) verläuft.

12. Messvorrichtung nach einem der vorherigen Ansprüche, **dadurch gekennzeichnet, dass** die Temperatursensoranordnung (13) mehrere Temperatursensoren (130) umfasst, die an zumindest einem der Halteteile (120A, 120B; 120B') angeordnet sind.

13. Messvorrichtung nach einem der vorherigen Ansprüche, **gekennzeichnet durch** mehrere, insbesondere auf gegenüberliegenden Seiten der Probe (2) angeordnete oder anordenbare Wärmequellen (10) und/oder mehrere, insbesondere auf gegenüberliegenden Seiten der Probe (2) angeordnete oder anordenbare Wärmesenken (11).

14. Verfahren zur Messung einer Wärmeleitfähigkeit einer Probe (2), umfassend die folgenden Schritte:

   - Bereitstellen (S100) einer Messvorrichtung (1) nach einem der vorherigen Ansprüche;
   - Fixieren (S101) einer Probe (2) mittels der Probenhalterung (12) der Messvorrichtung;
   - Erzeugen (S102) eines Temperaturgradienten mittels der Wärmequelle (10) und der Wärmesenke (11) der Messvorrichtung (1); und
   - Bestimmen (S103) der Wärmeleitfähigkeit der Probe (2) unter Verwendung von mittels der Temperatursensoranordnung (13) der Messvorrichtung (1) bestimmter Temperaturmesswerte und des durch die Wärmequelle (10) bereitgestellten Wärmestroms.

**Claims**

1. Measuring device for measuring thermal conductivity of a sample (2), comprising:

   - a heat source (10),
   - a heat sink (11),
   - a sample holder (12) for securing the sample with a plurality of holding parts (120A, 120B; 120B') designed for holding the sample, wherein at least one holding part (120A, 120B) is designed to thermally conductively connect the heat source (10) to the sample (2), and at least one further holding part (120A, 120B) is designed to thermally conductively connect the sample (2) to the heat sink (11), and
   - a temperature sensor arrangement (13) which is designed to determine temperature measurement values at at least three points between the heat source (10) and the heat sink (11) in order to determine the thermal conductivity of the sample (2),

   **characterized in that**
   at least one first holding part (120A) of the sample holder (12) comprises a first material, and at least one second holding part (120B; 120B') of the sample holder (12) comprises a second material, wherein the first material has different thermal conductivity from the second material, wherein in each case at least two holding parts (120A, 120B; 120B') are arranged on opposite sides of the sample (2) in such a manner that a heat flow from the heat source (10) to the heat sink (11) runs through the sample (2) perpendicularly to the heat flow direction (W) through one or more of the holding parts (120A, 120B; 120B') when the sample (2) is secured by means of the sample holder (12), wherein at least two first holding parts (120A) and at least two second holding parts (120B; 120B') are provided, and wherein the at least two first holding parts (120A) are arranged on opposite sides of the sample (2), and the at least two second holding parts (120B; 120B') are arranged on opposite sides of the sample (2) .

2. Measuring device according to Claim 1, **characterized in that** the thermal conductivity of the first material is at least five times the thermal conductivity of the second material, in particular at least ten times, wherein the first material is a heat conductor, in particular has thermal conductivity of more than 100 W/(m-K), and the second material is a heat insulator, in particular has thermal conductivity of below 1 W/(m-K).

3. Measuring device according to either of the preceding claims, **characterized in that** the holding parts (120A, 120B; 120B') are arranged in such a manner that a gap (S) is formed between a plurality of the holding parts (120A, 120B; 120B'), wherein the gap (S) is adjustable and/or is formed between two holding parts (120A, 120B; 120B') arranged on one side of the sample (2).

4. Measuring device according to one of the preceding claims, **characterized in that** the first material is aluminium and/or the second material is polyether ether ketone.

5. Measuring device according to one of the preceding claims, **characterized in that** a plurality of holding parts (120A, 120B; 120B'), in particular all of the holding parts (120A, 120B; 120B') of the sample holder (12), have substantially the same shape and/or size to one another.

6. Measuring device according to one of the preceding claims, **characterized in that** at least two of the holding parts (120A, 120B; 120B') of the sample holder (12) are arranged interchangeably.

7. Measuring device according to one of the preceding claims, **characterized in that** at least one first holding part (120A) and at least one second holding part (120B; 120B') are in contact or can be brought into contact with the sample (2).

8. Measuring device according to one of the preceding claims, **characterized in that** the holding parts (120A, 120B; 120B') are arranged in such a manner that a side of the sample (2) facing the heat source (10) or the heat sink (11) is only partially covered by the holding parts (120A, 120B; 120B').

9. Measuring device according to one of the preceding claims, **characterized in that** not all of the holding parts (120A, 120B; 120B') are arranged along the same axis.

10. Measuring device according to Claim 1, **characterized in that** no substantial contribution to the total heat flow flows through the second holding parts (120B; 120B'), and/or the at least two first holding parts (120A) and/or the at least two second holding parts (120B; 120B') are arranged offset with respect to one another perpendicularly to a heat flow direction (W) from the heat source (10) to the heat sink (11).

11. Measuring device according to one of the preceding claims, **characterized by** a clamping means (16) which is designed to exert a force on the sample holder (12) and the sample (2), wherein a force flux generated by the clamping means (16) runs in particular through all of the holding parts (120A, 120B; 120B') of the sample holder (12).

12. Measuring device according to one of the preceding claims, **characterized in that** the temperature sensor arrangement (13) comprises a plurality of temperature sensors (130) which are arranged on at least one of the holding parts (120A, 120B; 120B').

13. Measuring device according to one of the preceding claims, **characterized by** a plurality of heat sources (10) which are arranged or can be arranged in particular on opposite sides of the sample (2) and/or a plurality of heat sinks (11) which are arranged or can be arranged in particular on opposite sides of the sample (2).

14. Method for measuring thermal conductivity of a sample (2), comprising the following steps:

> - providing (S100) a measuring device (1) according to one of the preceding claims;
> - securing (S101) a sample (2) by means of the sample holder (12) of the measuring device;
> - generating (S102) a temperature gradient by means of the heat source (10) and the heat sink (11) of the measuring device (1); and

- determining (S103) the thermal conductivity of the sample (2) using temperature measurement values determined by means of the temperature sensor arrangement (13) of the measuring device (1), and the heat flow provided by the heat source (10) .

**Revendications**

1. Dispositif de mesure destiné à mesurer une conductivité thermique d'un échantillon (2), ledit dispositif de mesure comprenant :

- une source de chaleur (10),
- un dissipateur thermique (11),
- un porte-échantillon (12) destiné à fixer l'échantillon à l'aide de plusieurs pièces de retenue (120A, 120B ; 120B') conçues pour maintenir l'échantillon, au moins une pièce de retenue (120A, 120B) étant conçue pour relier la source de chaleur (10) à l'échantillon (2) de manière thermiquement conductrice et au moins une autre pièce de retenue (120A, 120B) étant conçue pour relier l'échantillon (2) au dissipateur de chaleur (11) de manière thermiquement conductrice et
- un ensemble de capteurs de température (13) qui est conçu pour déterminer des valeurs de mesure de température en au moins trois points entre la source de chaleur (10) et le dissipateur de chaleur (11) afin de déterminer la conductivité thermique de l'échantillon (2),

**caractérisé en ce que**
au moins une première pièce de retenue (120A) du porte-échantillon (12) comprend un premier matériau et au moins une deuxième pièce de retenue (120B ; 120B') du porte-échantillon (12) comprend un deuxième matériau, le premier matériau ayant une conductivité thermique différente de celle du deuxième matériau, au moins deux pièces de retenue (120A, 120B ; 120B') étant disposées sur des côtés opposés de l'échantillon (2) de manière à ce qu'un flux de chaleur se propage de la source de chaleur (10) vers le dissipateur thermique (11) à travers l'échantillon (2), perpendiculairement à la direction (W) du flux de chaleur par le biais d'une ou plusieurs des pièces de retenue (120A, 120B ; 120B') lorsque l'échantillon (2) est fixé au moyen du porte-échantillon (12), au moins deux premières pièces de retenue (120A) et au moins deux deuxièmes pièces de retenue (120B ; 120B') étant prévues, et les au moins deux premières pièces de retenue (120A) étant disposées sur des côtés opposés de l'échantillon (2) et les au moins deux deuxièmes pièces de retenue (120B ; 120B') étant disposées sur des côtés opposés de l'échantillon (2) .

2. Dispositif de mesure selon la revendication 1, **caractérisé en ce que** la conductivité thermique du premier matériau est égale à au moins cinq fois la conductivité thermique du deuxième matériau, notamment au moins dix fois, le premier matériau étant un conducteur thermique, ayant notamment une conductivité thermique supérieure à 100 W/(m.K), et le deuxième matériau étant un isolant thermique, ayant notamment une conductivité thermique inférieure à 1 W/(m.K).

3. Dispositif de mesure selon l'une quelconque des revendications précédentes, **caractérisé en ce que** les pièces de retenue (120A, 120B ; 120B') sont disposées de manière à ce qu'un espace (S) soit ménagé entre plusieurs des pièces de retenue (120A, 120B ; 120B'), l'espace (S) étant réglable et/ou étant ménagé entre deux pièces de retenue (120A, 120B ; 120B') disposées sur un côté de l'échantillon (2).

4. Dispositif de mesure selon l'une quelconque des revendications précédentes, **caractérisé en ce que** le premier matériau est de l'aluminium et/ou le deuxième matériau est du polyétheréthercétone.

5. Dispositif de mesure selon l'une quelconque des revendications précédentes, **caractérisé en ce que** plusieurs pièces de retenue (120A, 120B ; 120B'), en particulier toutes les pièces de retenue (120A, 120B ; 120B') du porte-échantillon (12), ont sensiblement la même forme et/ou la même taille.

6. Dispositif de mesure selon l'une quelconque des revendications précédentes, **caractérisé en ce qu'**au moins deux des pièces de retenue (120A, 120B ; 120B') du porte-échantillon (12) sont disposées de manière interchangeable.

7. Dispositif de mesure selon l'une quelconque des revendications précédentes, **caractérisé en ce que** au moins une première pièce de retenue (120A) et au moins une deuxième pièce de retenue (120B ; 120B') sont ou peuvent être amenées en contact avec l'échantillon (2).

**8.** Dispositif de mesure selon l'une quelconque des revendications précédentes, **caractérisé en ce que** les pièces de retenue (120A, 120B ; 120B') sont disposées de manière à ce que le côté de l'échantillon (2) qui est dirigé vers la source de chaleur (10) ou le dissipateur thermique (11) n'est que partiellement recouvert par les pièces de retenue (120A, 120B ; 120B').

**9.** Dispositif de mesure selon l'une quelconque des revendications précédentes, **caractérisé en ce que** les pièces de retenue (120A, 120B ; 120B') ne sont pas toutes disposées suivant le même axe.

**10.** Dispositif de mesure selon la revendication 1, **caractérisé en ce que** les deuxièmes pièces de retenue (120B ; 120B') n'apportent aucune contribution significative à tout le flux thermique et/ou les au moins deux premières pièces de retenue (120A) et/ou les au moins deux deuxièmes pièces de retenue (120B ; 120B') sont disposées perpendiculairement à une direction (W) du flux thermique allant de la source de chaleur (10) au dissipateur thermique (11) en étant décalées les unes par rapport aux autres.

**11.** Dispositif de mesure selon l'une quelconque des revendications précédentes, **caractérisé par** un moyen de serrage (16) qui est conçu pour exercer une force sur le porte-échantillon (12) et l'échantillon (2), la force générée par les moyens de serrage (16) s'étendant en particulier à travers toutes les pièces de retenue (120A, 120B ; 120B') du porte-échantillon (12).

**12.** Dispositif de mesure selon l'une quelconque des revendications précédentes, **caractérisé en ce que** l'ensemble de capteurs de température (13) comprend plusieurs capteurs de température (130) qui sont disposés sur au moins une des pièces de retenue (120A, 120B ; 120B').

**13.** Dispositif de mesure selon l'une quelconque des revendications précédentes, **caractérisé par** plusieurs sources de chaleur (10) disposées ou pouvant être disposées notamment sur des côtés opposés de l'échantillon (2) et/ou plusieurs dissipateurs thermiques (11) disposées ou pouvant être disposées en particulier sur des côtés opposés de l'échantillon (2).

**14.** Procédé de mesure d'une conductivité thermique d'un échantillon (2), ledit procédé comprenant les étapes suivantes :

  - fournir (S100) un dispositif de mesure (1) selon l'une quelconque des revendications précédentes ;
  - fixer (S101) un échantillon (2) au moyen du porte-échantillon (12) du dispositif de mesure ;
  - générer (S102) un gradient de température au moyen de la source de chaleur (10) et du dissipateur thermique (11) du dispositif de mesure (1) ; et
  - déterminer (S103) la conductivité thermique de l'échantillon (2) à l'aide de valeurs de mesure de température déterminées par l'ensemble de capteurs de température (13) du dispositif de mesure (1) et du flux de chaleur fourni par la source de chaleur (10).

# FIG 1A

# FIG 1B

# FIG 1C

# FIG 2

# FIG 3

# FIG 4

# FIG 5

P1

P2

121

12

10

120A

S

120B

2

120B

120A

S

121

11

P3

P4

# FIG 6

# FIG 7

## FIG 8

## FIG 9

# FIG 10

```
┌─────────────────────────┐
│                         │──── S100
└─────────────────────────┘
             │
             ▼
┌─────────────────────────┐
│                         │──── S101
└─────────────────────────┘
             │
             ▼
┌─────────────────────────┐
│                         │──── S102
└─────────────────────────┘
             │
             ▼
┌─────────────────────────┐
│                         │──── S103
└─────────────────────────┘
```

# FIG 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6331075 B1
- WO 2017073479 A1

### In der Beschreibung aufgeführte Nicht-Patentliteratur

- Measurement Techniques and Considerations for Determining Thermal Conductivity of Bulk Materials. **TRITT, T. M. ; WESTON, D.** Thermal Conductivity. Springer, 2004, 187-203
- **MALDONADO, O.** Pulse Method for Simultaneous Measurement of Electric Thermopower and Heat Conductivity at Low Temperatures. *Cryogenics,* 1992, vol. 32 (10), 908-912
- **STALHANE, B. ; PYK, S.** New Method for Determining the Coefficients of Thermal Conductivity. *Tek. Tidskr.,* 1931, vol. 61 (28), 389-393
- **BOUGUERRA, A. et al.** Measurement of Thermal Conductivity, Thermal Diffusivity and Heat Capacity of Highly Porous Building Materials Using Transient Plane Source Technique. *Int. Commun. Heat Mass Transfer,* 2001, vol. 28 (8), 1065-1078
- **PARKER, W. J. et al.** Flash Method of Determining Thermal Diffusivity, Heat Capacity, and Thermal Conductivity. *J. Appl. Phys.,* 1961, vol. 32 (9), 1679-1684